# EUROPEAN PATENT APPLICATION

(11) **EP 4 535 167 A1**
(43) Date of publication of application: **09.04.2025**
(21) Application number: 23834690.2
(22) Date of filing: 28.06.2023
(51) Int. Cl.: G06F 9/48

(54) **TASK MIGRATION METHOD AND APPARATUS, AND DEVICE, STORAGE MEDIUM AND PRODUCT**

(30) Priority: 06.07.2022 CN 202210799073
(71) Applicant: Huawei Technologies Co., Ltd., Shenzhen, Guangdong 518129 (CN)
(72) Inventor: ZHANG, Song, Shenzhen, Guangdong 518129 (CN); JING, Rui, Shenzhen, Guangdong 518129 (CN); CAI, Haomin, Shenzhen, Guangdong 518129 (CN); LEI, Zhongkai, Shenzhen, Guangdong 518129 (CN)
(74) Representative: Gill Jennings & Every LLP
(86) International application number: PCT/CN2023/103433
(87) International publication number: WO 2024/007922

(57) **Abstract**

This application provides a task migration method and apparatus, a device, a storage medium, and a product, and pertains to the field of computer technologies. According to the technical solutions provided in embodiments of this application, a task with a high priority can be preferably migrated when load balancing is performed, so that the load balancing can be implemented without affecting quality of service of the task with the high priority, and CPU resource utilization can be improved.

## Description

This application claims priority to Chinese Patent Application No. 202210799073.6, filed with the China National Intellectual Property Administration on July 6, 2022 and entitled "TASK MIGRATION METHOD AND APPARATUS, DEVICE, STORAGE MEDIUM, AND PRODUCT", which is incorporated herein by reference in its entirety.

### TECHNICAL FIELD

This application relates to the field of computer technologies, and in particular, to a task migration method and apparatus, a device, a storage medium, and a product.

### BACKGROUND

To ensure increasing computing requirements of internet applications and cloud computing systems, a plurality of computing devices are usually configured in a system, and one or more central processing units (central processing units, CPUs) may be configured in each computing device to work cooperatively. However, CPU utilization of the system is usually low. As a result, a large quantity of resources are wasted. Therefore, the CPU utilization needs to be improved urgently.

Therefore, load balancing is proposed in a related technology, to improve the utilization by migrating a task on a high-load CPU to a light-load CPU. However, during task migration, quality of service of some tasks may be affected. As a result, normal running of the system is affected.

### SUMMARY

Embodiments of this application provide a task migration method and apparatus, a device, a storage medium, and a product, to improve CPU utilization while ensuring normal running of a system. Technical solutions are as follows.

According to an aspect, a task migration method is provided, including: determining a first CPU and a second CPU from a plurality of CPUs, where each CPU corresponds to at least one task waiting queue, the at least one task waiting queue is used to store tasks with a plurality of priorities, at least one task waiting queue of the second CPU includes at least one first task and at least one second task, the first task is a task with a highest priority in the at least one task waiting queue, and a first priority corresponding to the first task is higher than a second priority corresponding to the second task; and preferably migrating the at least one first task in the at least one task waiting queue of the second CPU to at least one task waiting queue of the first CPU.

According to the technical solution provided in this embodiment of this application, a task with a high priority can be preferably migrated when load balancing is performed, so that the load balancing can be implemented without affecting quality of service of the task with the high priority, and CPU resource utilization can be improved.

Further, in the plurality of CPUs, a CPU that meets a task migration-in condition may be determined as the first CPU, and a CPU that meets a task migration-out condition may be determined as the second CPU.

In some embodiments, after the preferably migrating the at least one first task in the at least one task waiting queue of the second CPU to the first CPU, the method further includes:
when task running statuses of the first CPU and the second CPU meet a preset condition, migrating the at least one second task in the at least one task waiting queue of the second CPU to the at least one task waiting queue of the first CPU.

It may be understood that, if a quantity of tasks that can be migrated to the first CPU is greater than a quantity of all first tasks in the at least one task waiting queue of the second CPU, that is, after the first task is preferably migrated, the second CPU can further continue to receive a task to be migrated. In this case, migration of the second task can be considered.

In this embodiment of this application, the task running status of the CPU includes whether the CPU is running a task, a priority of a task being run by the CPU, and the like, so that it can be determined, based on the task running status of the CPU, whether quality of service of a running task with the first priority is affected by the migration of the second task, that is, it needs to be ensured that migration of a task with a low priority does not affect running of a task with a high priority. If no impact is caused, the second task is migrated. If impact is caused, migration of the second task is abandoned, that is, the second task is not migrated. According to the process, while ensuring that the quality of service of the task with the high priority is not affected, a task with another priority is further migrated, thereby improving the CPU resource utilization.

The technical solution is applied to a system having two or more priorities. For example, if there are tasks with three priorities, a task with a highest priority is preferably migrated. After the task with the highest priority is migrated, migration of a task with a second highest priority is considered, then migration of a task with a lowest priority is considered, and the same rule applies to the rest.

In some embodiments, the preset condition is that the second CPU is running a task with the first priority and the first CPU is running a task with the second priority.

In some embodiments, the preset condition is that both the first CPU and the second CPU are running a task with the second priority.

In some embodiments, the method further includes: when the first CPU does not run a task, and the second CPU is running a task with the first priority, skipping migrating the second task.

In some embodiments, the method further includes: when a task with the first priority is running in both the first CPU and the second CPU, skipping migrating the second task.

In some embodiments, there are a plurality of task waiting queues, and each task waiting queue is used to store tasks with a same priority. For the task waiting queue, tasks with a plurality of priorities may be stored by using one task waiting queue, or tasks with different priorities may be stored by using different task waiting queues, that is, the tasks with the different priorities are stored in the different task waiting queues respectively. For example, a first task waiting queue is used to store the task with the first priority, and a second task waiting queue is used to store the task with the second priority. In this respective storage manner, during task migration, queue locking can be performed respectively. For example, when the task with the first priority is migrated, only a queue with the first priority is locked, and a queue with the second priority is not locked. Therefore, there is no impact on enqueuing and dequeuing of a task in the queue with the second priority.

In some embodiments, the first task is an online task, and the second task is an offline task. An online task that has a high requirement on real-time performance can be processed in a timely manner by preferably migrating the online task.

According to an aspect, a task migration apparatus is provided. The apparatus includes a plurality of functional modules, configured to perform corresponding steps in the task migration method according to the first aspect.

According to an aspect, a computing device is provided. The computing device includes a processor and a memory. The memory is configured to store at least one segment of program code, and the at least one segment of program code is loaded by the processor to perform the task migration method.

According to an aspect, a computer-readable storage medium is provided. The computer-readable storage medium is configured to store at least one segment of program code, and the at least one segment of program code is used to perform the task migration method.

According to an aspect, a computer program product is provided. When the computer program product runs on a computing device, the computing device is enabled to perform the task migration method.

### BRIEF DESCRIPTION OF DRAWINGS

FIG. 1 is a diagram of a structure of a system 100;
FIG. 2 is a diagram of a structure of a computing device according to an embodiment of this application;
FIG. 3 is a diagram of maintaining two priorities by using one task waiting queue;
FIG. 4 is a flowchart of a task migration method according to an embodiment of this application;
FIG. 5 is an example diagram of task migration according to an embodiment of this application;
FIG. 6 is a diagram in which different priorities correspond to different task waiting queues;
FIG. 7 is a flowchart of a task migration method according to an embodiment of this application;
FIG. 8 is an example diagram of task migration according to an embodiment of this application; and
FIG. 9 is a diagram of a structure of a task migration apparatus according to an embodiment of this application.

### DESCRIPTION OF EMBODIMENTS

To make objectives, technical solutions, and advantages of this application clearer, the following further describes implementations of this application in detail with reference to accompanying drawings.

It should be noted that information (including but not limited to user equipment information and personal information of a user), data (including but not limited to data used for analysis, stored data, and presented data), and signals in this application are all used under authorization by the user or full authorization by all parties, and collection, use, and processing of related data need to conform to related laws, regulations, and standards of related countries and regions. For example, task data in this application is obtained with sufficient authorization.

The following describes an application scenario and an implementation environment in this application.

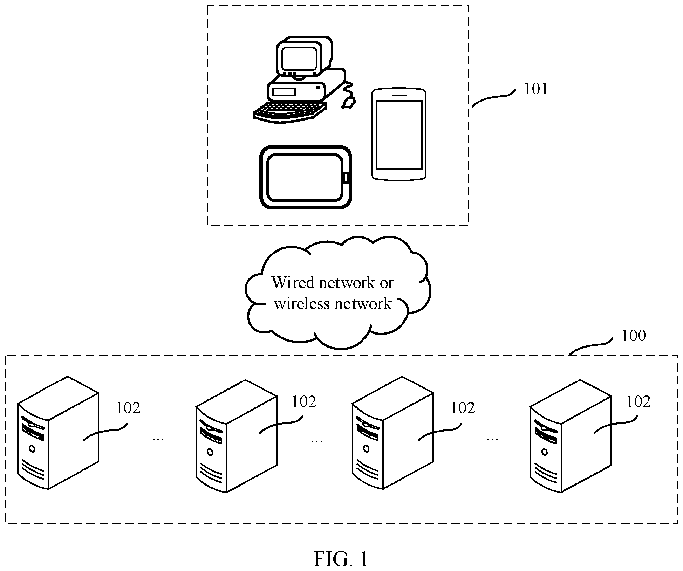

FIG. 1 is a diagram of a structure of a system 100. Refer to FIG. 1. The system is configured to provide a service. For example, the system is a cloud computing system, and is configured to provide a service like computing for a terminal 101. The system 100 includes a plurality of processing nodes 102, and the processing node 102 is configured to process a service instruction received by the system 100. Each processing node 102 may be an independent physical device, or may be a virtual node on a physical device. This is not limited in this embodiment of this application. Each processing node 102 may include one or more CPUs. In some embodiments, the CPU in the system 100 may be divided into one or more scheduling domains, and each scheduling domain includes a plurality of CPUs, to perform load balancing in the scheduling domain. It may be understood that division into the scheduling domain is not limited by a physical device, that is, CPUs in one scheduling domain may be located in a same physical device, or may be located in different physical devices. A load balancer may be configured for each processing node 102, or a plurality of processing nodes share a load balancer, to perform the load balancing.

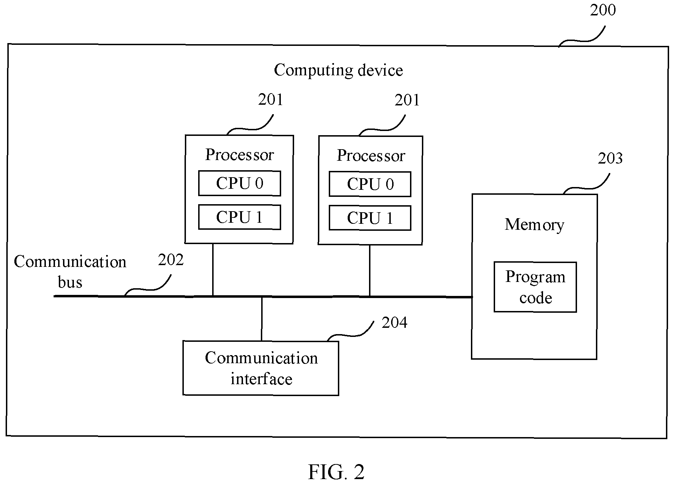

The processing node 102 may be implemented as a computing device. FIG. 2 is a diagram of a structure of a computing device according to an embodiment of this application. For example, the computing device 200 is configured as a load balancer or a processing node in a task migration method. The computing device 200 may be a host, a server, a personal computer, or the like. The computing device 200 may be implemented by using a general bus architecture.

The computing device 200 includes at least one processor 201, a communication bus 202, a memory 203, and at least one communication interface 204.

The processor 201 is, for example, a general-purpose central processing unit (central processing unit, CPU), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 201 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field programmable gate array (field programmable gate array, FPGA), a generic array logic (generic array logic, GAL), or any combination thereof. During specific implementation, in an embodiment, the processor 201 may include one or more CPUs.

The communication bus 202 is configured to transmit information between the components. The communication bus 202 may be classified into an address bus, a data bus, a control bus, or the like. For ease of indication, only one thick line is used to indicate the bus in the figure, but this does not mean that there is only one bus or only one type of bus.

The memory 203 is, for example, a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer, but is not limited thereto. For example, the memory 203 exists independently, and is connected to the processor 201 through the communication bus 202. The memory 203 may alternatively be integrated with the processor 201.

The communication interface 204 is configured to communicate with another device or a communication network by using any apparatus like a transceiver. The communication interface 204 includes a wired communication interface, or may include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like.

In this embodiment of this application, a priority is set for a task. The priority may be determined based on a quality of service requirement of the task. For example, a high priority is set for a task having a high requirement on real-time performance, and a low priority is set for a task having a low requirement on the real-time performance. For an offline task and an online task, the online task has a high requirement on the real-time performance, and the offline task has a low requirement on the real-time performance. In this case, a priority of the online task may be set to be higher than a priority of the offline task, so that the online task can be preferably scheduled and executed, and the offline task can be scheduled and executed later than the online task. Correspondingly, when load balancing is performed, a task with a high priority is preferably migrated, and then a task with a low priority is migrated, so that the load balancing can be implemented without affecting quality of service of the task with the high priority, and CPU utilization can be improved.

Tasks may be scheduled in different manners in a system. One manner is that one CPU corresponds to one task waiting queue, and the task waiting queue is used to store tasks with a plurality of priorities. In this case, for the task waiting queue, when being enqueued, the tasks with different priorities may be added to the queue in different directions of the task waiting queue. For example, a task with a high priority may be enqueued from a queue head, and a task with a low priority may be enqueued from a queue tail. In another manner, one CPU corresponds to a plurality of task waiting queues, each task waiting queue is used to store tasks with one priority, and tasks with different priorities may enter task waiting queues with corresponding priorities. In some embodiments, the task waiting queue is a task waiting queue maintained by a completely fair scheduler (completely fair scheduler, CFS).

The following describes the technical solutions in embodiments of this application based on the two types of task waiting queues.

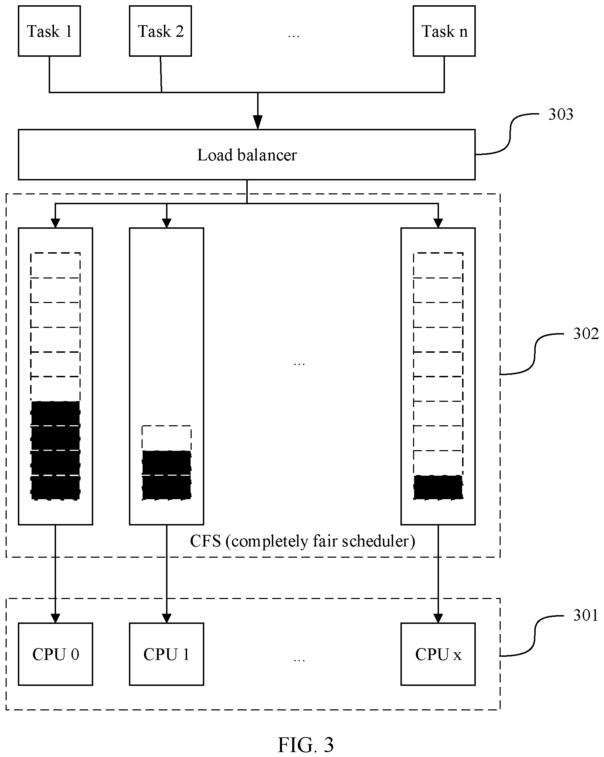

FIG. 3 is a diagram of maintaining tasks with two priorities by using one task waiting queue. FIG. 3 shows a load balancer 301, a CFS 302, and a CPU 0 to a CPU x. One CPU corresponds to one task waiting queue, the task waiting queue includes tasks with a first priority and a second priority, and the first priority is higher than the second priority. To arrange the tasks with the two priorities in the task waiting queue based on the priorities, the task waiting queue may use any one of a doubly linked list, a hash table, a dictionary, a red-black tree, or the like. For example, the task waiting queue uses the doubly linked list, and the tasks with different priorities are enqueued in different directions of the task waiting queue. For example, the task with the first priority is enqueued from a queue head, and the task with the second priority is enqueued from a queue tail. As shown in FIG. 3, a black block is used to indicate the task with the first priority, and a white block is used to indicate the task with the second priority.

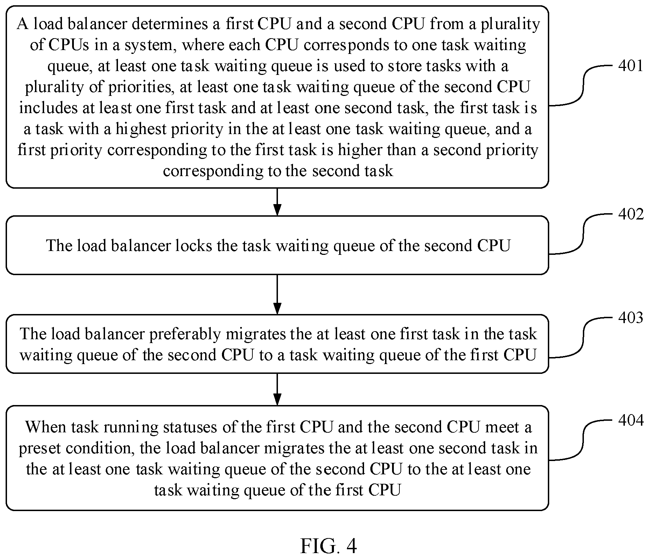

When task migration based on load balancing is performed based on the architecture in FIG. 3, refer to a procedure shown in FIG. 4. The procedure includes steps 401 to 404 below.

401: A load balancer determines a first CPU and a second CPU from a plurality of CPUs in a system, where each CPU corresponds to one task waiting queue, at least one task waiting queue is used to store tasks with a plurality of priorities, at least one task waiting queue of the second CPU includes at least one first task and at least one second task, the first task is a task with a highest priority in the at least one task waiting queue, and a first priority corresponding to the first task is higher than a second priority corresponding to the second task.

It may be understood that when the task migration is performed, the load balancer 301 of the system may perform the load balancing, or the CFS may perform the load balancing. This is not limited in embodiments of this application. For example, the load balancer 301 performs the load balancing. If detecting that the first CPU meets a task migration-in condition, for example, a load is less than a load threshold, the load balancer 301 determines, in a scheduling domain of the CPU, a second CPU that meets a task migration-out condition, for example, a load is greater than the load threshold, to balance the loads of the two CPUs. Certainly, alternatively, when detecting that the second CPU meets a task migration-out condition, for example, a load is greater than a load threshold, the load balancer may further determine, in a scheduling domain of the CPU, a first CPU that meets a task migration-in condition. A type of CPU that triggers a load balancing procedure is not limited in embodiments of this application. The CFS may also perform the load balancing procedure when detecting that any CPU meets the task migration-in condition. This is not limited in this application. It may be understood that the scheduling domain may be a domain formed by some CPUs in the system, or may be a domain formed by all CPUs in the system. This may vary with different system settings of the system.

402: The load balancer locks the task waiting queue of the second CPU.

Locking herein refers to suspending scheduling performed by the CFS of the second CPU on the task waiting queue of the second CPU, so that operations such as scheduling and deletion cannot be performed on a task in the task waiting queue, and a new task cannot be inserted into the task waiting queue either. It may be understood that step 402 is performed after the load balancer determines that a task to be migrated exists in the task waiting queue of the second CPU. It can be ensured that the task migration is performed normally by locking the task waiting queue.

403: The load balancer preferably migrates the at least one first task in the task waiting queue of the second CPU to a task waiting queue of the first CPU.

Preferably herein means that a migration sequence of the first task is before all other priorities, and before the first task in the task waiting queue is migrated, a task with another priority is not migrated.

In this embodiment of this application, an example in which the task waiting queue is in a form of a doubly linked list is merely used for description. The task with the first priority is enqueued from the queue head, and the task with the second priority is enqueued from the queue tail. Correspondingly, the load balancer traverses from the queue head to the queue tail of the task waiting queue of the second CPU, thereby ensuring that the first task with the high priority can be preferably migrated. When the task waiting queue is implemented in another form, the migration process may be performed based on an actual implementation of the task waiting queue.

After traversing a first task, the load balancer determines, based on a quantity of currently migrated tasks and a quantity of tasks that can be migrated to the first CPU, whether to migrate the currently traversed first task. If the quantity of migrated tasks fails to reach the quantity of tasks that can be migrated, it indicates that the first CPU can further continue to receive a task to be migrated, and the first task is migrated to the task waiting queue of the first CPU; otherwise, the first task is not migrated, and the load balancing procedure is exited. The quantity of tasks that can be migrated is a quantity of tasks that can be migrated to the first CPU in this load balancing procedure. In some embodiments, the quantity of tasks that can be migrated is determined based on a load status of the first CPU.

It may be understood that, each time the load balancer traverses a task in the traversal process, the load balancer can learn of a priority of the task, to determine whether to directly perform the task migration. If the task is the task with the first priority, namely, the first task, and if the quantity of migrated tasks fails to reach the quantity of tasks that can be migrated to the first CPU, the load balancer directly performs the task migration. However, if the quantity of migrated tasks fails to reach the quantity of tasks that can be migrated to the first CPU, the load balancer may continue to perform traversal. When the load balancer traverses the task with the second priority, namely, the second task, and if the quantity of migrated tasks fails to reach the quantity of tasks that can be migrated to the first CPU, the load balancer performs step 404, to determine whether to migrate the traversed second task.

404: When task running statuses of the first CPU and the second CPU meet a preset condition, the load balancer migrates the at least one second task in the at least one task waiting queue of the second CPU to the at least one task waiting queue of the first CPU.

If the second task is traversed, and the quantity of currently migrated tasks fails to reach the quantity of tasks that can be migrated to the first CPU, the task migration may further continue to be performed. However, because the priority of the second task is lower than that of the first task, migration of the second task does not affect execution of the first task. Therefore, the load balancer determines, based on the task running statuses of the first CPU and the second CPU, whether to migrate the second task.

For ease of description, Table 1 is provided herein. Table 1 shows task running statuses of CPUs and several cases of whether to perform migration in the task running statuses.

**Table 1**

| Case | First CPU | Second CPU | Task to be migrated | Whether to migrate |
|---|---|---|---|---|
| 1 | Run a task with a second priority | Run a task with a first priority | Second task | Yes |
| 2 | Run a task with a second priority | Run a task with a second priority | Second task | Yes |
| 3 | No task is running | Run a task with a first priority | Second task | No |
| 4 | Run a task with a first priority | Run a task with a first priority | Second task | No |

The following describes the several cases shown in Table 1:
Case 1: If the second CPU is running the task with the first priority, and the first CPU is running the task with the second priority, the second task is migrated.

In this case, because the first CPU is running the second task with the second priority, the migration of the second task does not cause excessive impact on the first task that is running by the second CPU.

Case 2: If both the first CPU and the second CPU are running the tasks with the second priority, the second task is migrated.

In this case, because neither the first CPU nor the second CPU currently runs a first task, the migration of the second task does not affect performance of any type of task. Therefore, the second task may be migrated.

Case 3: If the first CPU is in an idle state, and the second CPU is running the task with the first priority, the second task is not migrated, that is, the migration of the second task is abandoned.

In this case, because the first CPU is in the idle state, if the second task is migrated, the first CPU needs to be woken up to perform the task migration. First, when the first CPU is woken up, a clock interrupt is triggered, and the clock interrupt is global. As a result, all the CPUs in the system suspend tasks that are running. Second, when the first CPU runs the second task, the second task also causes problems such as last-level cache occupation and memory bandwidth occupation. Because the first CPU and the second CPU share a memory, and may also share the last-level cache, a data read rate of the second CPU is reduced in this case. As a result, running performance of the first task is affected. With reference to the foregoing reasons, the migration of the second task in this case affects the first task that is running in the second CPU. Therefore, the migration of the second task is abandoned.

Case 4: If both the first CPU and the second CPU are running the tasks with the first priority, the second task is not migrated, that is, the migration of the second task is abandoned.

In this case, if the second task is migrated, the second task that is running in the second CPU is also affected. Therefore, the migration of the second task is abandoned.

It may be understood that, in the foregoing process, whether to migrate the second task is determined based on the running statuses of the first CPU and the second CPU, so that it can be ensured that when the second task is migrated, the first task that is running is not affected, thereby ensuring quality of service of the first task.

It may be understood that, in the task migration process, a task structure of a task is extracted from a task waiting queue of a CPU, namely, task detachment (detach_task), and then the task structure of the task is placed in a task waiting queue of another CPU, namely, task attachment (attach_task). The task structure includes a task identifier, task context information, and a task status, for example, affinity information of a task, and may further include information such as a memory associated with the task.

In this embodiment of this application, when the load balancing is performed, the task with the high priority is preferably migrated, and then the task with the low priority is migrated, so that the load balancing can be implemented without affecting quality of service of the task with the high priority, and CPU resource utilization can be improved. When the task with the low priority is migrated, the task running statuses of the CPUs to and from which the task is migrated are considered, to avoid the performance impact caused by such a task with the low priority on the running task with the high priority, thereby further ensuring the quality of service of the task with the high priority.

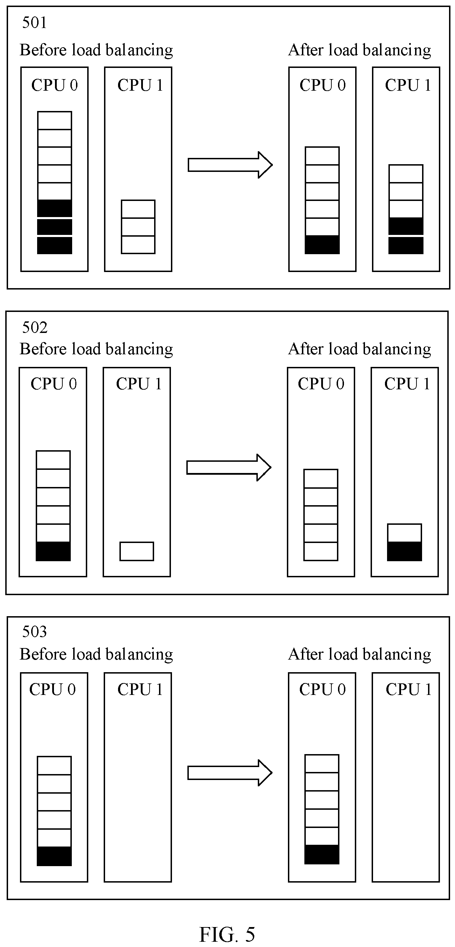

To more intuitively reflect a specific implementation process of the embodiment shown in FIG. 3, the following provides descriptions based on two examples. FIG. 5 is an example diagram of task migration according to an embodiment of this application. A black block in FIG. 5 indicates an online task, and a white block indicates an offline task. A priority of the online task is higher than that of the offline task.

As shown in 501 in FIG. 5, before the task migration, there are three online tasks and five offline tasks in a task waiting queue of a CPU 0, and there are three offline tasks in a task waiting queue of a CPU 1. After a load balancing process is triggered, the task in the task waiting queue of the CPU 0 can be migrated to the CPU 1, and a quantity of tasks that can be migrated to the CPU 1 is 2. In this case, two online tasks in the task waiting queue of the CPU 0 are preferably migrated to the CPU 1.

As shown in 502 in FIG. 5, there is one online task and five offline tasks in a task waiting queue of a CPU 0, and there is an online task in a running state on the CPU 0. There is one offline task in a task waiting queue of a CPU 1, and there is an online task in the running state on the CPU 1. After the load balancing process is triggered, the task in the task waiting queue of the CPU 0 can be migrated to the CPU 1, and a quantity of tasks that can be migrated to the CPU 1 is 2. After one online task is migrated, if an offline task is traversed, it can be learned, based on the tasks that are currently running by the CPUs, that migration of the offline task affects the online tasks that are running by the CPU 0 and the CPU 1. In this case, the offline task is not migrated, that is, the migration of the offline task is abandoned.

As shown in 503 in FIG. 5, there is one online task and five offline tasks in a task waiting queue of a CPU 0, and there is an online task in a running state on the CPU 0. A CPU 1 is in an idle state, and does not run any task, and a task waiting queue of the CPU 1 has no task to be processed. After the load balancing process is triggered, the task in the task waiting queue of the CPU 0 can be migrated to the CPU 1, and a quantity of tasks that can be migrated to the CPU 1 is 2. However, migration of an offline task needs to wake up the CPU 1, and waking up the CPU 1 causes a clock interrupt, and further affects the online task in the running state on the CPU 0. In this case, the offline task is not migrated, that is, the migration of the offline task is abandoned.

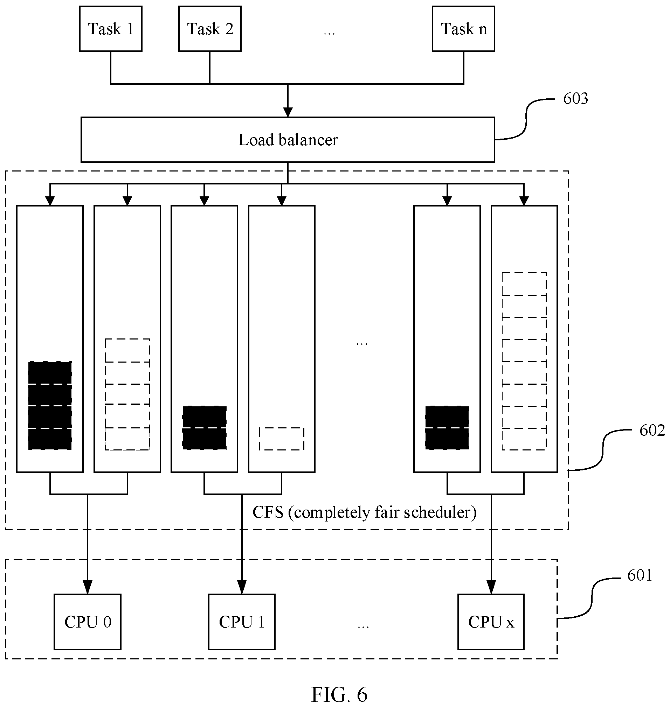

FIG. 3 and FIG. 4 describe embodiments of this application based on an implementation in which one task waiting queue maintains two priorities. The following uses an example in which different priorities correspond to different task waiting queues for description. FIG. 6 is a diagram in which different priorities correspond to different task waiting queues. FIG. 6 shows a load balancer 601, a CFS 602, and a CPU 0 to a CPU x, where x is an integer greater than 1. One CPU of the system corresponds to at least two task waiting queues. Each task waiting queue is used to store tasks with a same priority, and different task waiting queues are used to store tasks with different priorities, that is, the tasks with the different priorities enter the different task waiting queues, so that the CFS performs scheduling. It should be noted that FIG. 6 shows only two task waiting queues. One is used to store a task with a first priority, and the other is used to store a task with a second priority. The first priority is higher than the second priority.

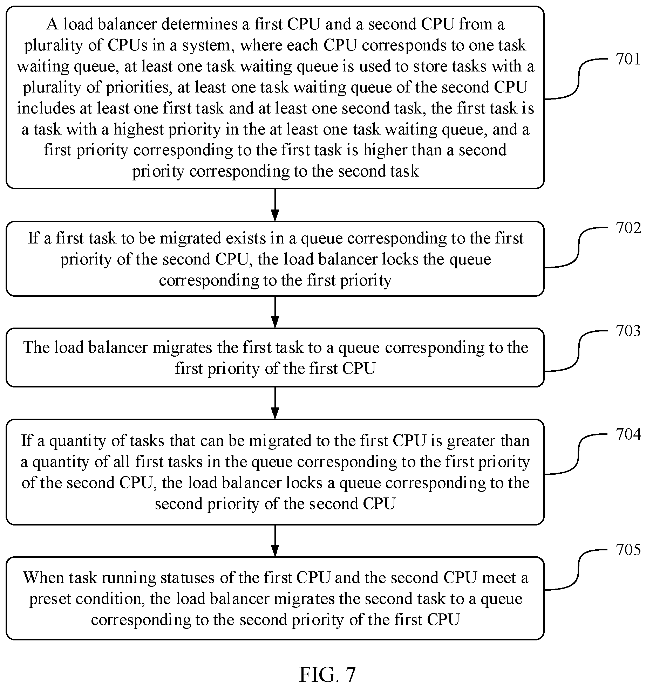

When task migration based on load balancing is performed based on the architecture in FIG. 6, refer to a procedure shown in FIG. 7. The procedure includes steps 701 to 705 below.

701: A load balancer determines a first CPU and a second CPU from a plurality of CPUs in a system, where each CPU corresponds to one task waiting queue, at least one task waiting queue is used to store tasks with a plurality of priorities, at least one task waiting queue of the second CPU includes at least one first task and at least one second task, the first task is a task with a highest priority in the at least one task waiting queue, and a first priority corresponding to the first task is higher than a second priority corresponding to the second task.

For step 701, refer to step 401.

Steps 702 to 705 below may refer to any task obtaining process for a queue after a load balancing procedure is triggered. For the second CPU, a queue corresponding to the first priority of the second CPU is an object that is preferably obtained. When the queue corresponding to the first priority is empty, migration of a task in a queue with another priority is further considered, and the same rule applies to the rest. The task migration is performed on a queue corresponding to a lower priority only when a queue corresponding to a higher priority is empty (for example, the queue is idle or all tasks in the queue are migrated).

702: If the first task to be migrated exists in the queue corresponding to the first priority of the second CPU, the load balancer locks the queue corresponding to the first priority.

When the task waiting queue includes a plurality of queues, because task priorities stored in the plurality of queues are different, the load balancer preferably obtains, from the queue corresponding to the first priority, the task to be migrated. In this way, it can be ensured that a task with a high priority can be preferably migrated, thereby ensuring quality of service of the task. Correspondingly, the load balancer locks a queue corresponding to the first priority of the first CPU, to ensure that the task migration is performed normally.

703: The load balancer migrates the first task to the queue corresponding to the first priority of the first CPU.

After locking the queue corresponding to the first priority, the load balancer may traverse the queue in an order from a queue head to a queue tail, to obtain the first task to be migrated. After obtaining the first task, the load balancer determines, based on a quantity of migrated tasks and a quantity of tasks that can be migrated to the first CPU, whether the first task can be migrated. A process and a task migration process are similar to those in step 304. Details are not described herein again.

It should be noted that, if the migration of the queue corresponding to the first priority of the second CPU is completed, and the quantity of migrated tasks fails to reach the quantity of tasks that can be migrated to the first CPU, that is, when the quantity of tasks that can be migrated to the first CPU is greater than a quantity of all first tasks in the at least one task waiting queue of the second CPU, step 704 may be performed, to migrate a task with a lower priority.

704: If the quantity of tasks that can be migrated to the first CPU is greater than the quantity of all the first tasks in the queue corresponding to the first priority of the second CPU, the load balancer locks a queue corresponding to the second priority of the second CPU.

Correspondingly, the load balancer locks the queue corresponding to the first priority of the first CPU, to ensure that the task migration is performed normally. It may be understood that, in this multi-queue scenario, queues locked each time are queues with a same priority on different CPUs, that is, in each locking process, task waiting queues with other priorities are all in an unlocked state, and may be normally invoked and executed. In this way, a case like task termination caused by simultaneous locking of a plurality of queues is avoided.

In some embodiments, if the queue corresponding to the first priority of the first CPU is empty, step 704 is performed after step 701, to migrate a task whose priority is lower than the first priority.

705: When task running statuses of the first CPU and the second CPU meet a preset condition, the load balancer migrates the second task to a queue corresponding to the second priority of the first CPU.

The preset condition in step 705 is similar to that in step 404, as shown in Table 1. Details are not described herein again.

In this embodiment of this application, when the load balancing is performed, the task with the high priority is preferably migrated, and then the task with the low priority is migrated, so that the load balancing can be implemented without affecting the quality of service of the task with the high priority, and CPU resource utilization can be improved. When the task with the low priority is migrated, the task running statuses of the CPUs to and from which the task is migrated are considered, to avoid the performance impact caused by such a task with the low priority on the running task with the high priority, thereby further ensuring the quality of service of the task with the high priority.

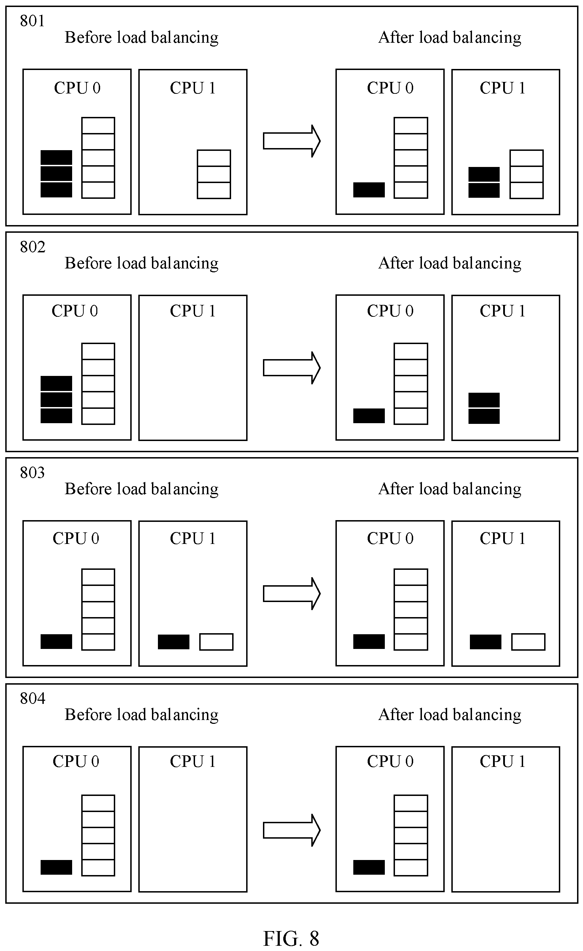

To more intuitively reflect specific implementation processes of the embodiments shown in FIG. 6 and FIG. 7, the following provides descriptions based on two examples. As shown in FIG. 8, a black block in FIG. 8 indicates an online task, and a white block indicates an offline task. A priority of the online task is higher than that of the offline task.

As shown in 801 in FIG. 8, before task migration, there are three online tasks in an online task queue of a CPU 0, and there are five offline tasks in an offline task queue of the CPU 0. There is no task in an online task queue of a CPU 1, and there are three offline tasks in an offline task queue of the CPU 1. After a load balancing process is triggered, the online task of the CPU 0 is preferably migrated. If a quantity of tasks that can be migrated to a first CPU is 2, two online tasks in the online task queue of the CPU 0 are preferably migrated to the online task queue of the CPU 1.

As shown in 802 in FIG. 8, before the task migration, there are three online tasks in an online task queue of a CPU 0, and there are five offline tasks in an offline task queue of the CPU 0. Neither an online task queue nor an offline task queue of a CPU 1 has a task, and the CPU 1 does not run any task, that is, the CPU 1 is in an idle state. After the load balancing process is triggered, the online task of the CPU 0 is preferably migrated. If a quantity of tasks that can be migrated to a first CPU is 2, two online tasks in the online task queue of the CPU 0 are preferably migrated to the online task queue of the CPU 1.

As shown in 803 in FIG. 8, there is one online task in an online task queue of a CPU 0, and the online task is in a running state; and there are five offline tasks in an offline task queue of the CPU 0. There is one online task in an online task queue of a CPU 1, the online task is in the running state; and there is one offline task in an offline task queue of the CPU 1. After the load balancing process is triggered, quantities of tasks in the online task queues of the CPU 0 and the CPU 1 are the same, that is, there is no task that can be migrated in the online task queue of the CPU 0. However, it can be learned, based on the tasks that are currently running by the CPUs, that migration of an offline task affects the online tasks that are running by the CPU 0 and the CPU 1. In this case, the offline task is not migrated, that is, the migration of the offline task is abandoned.

As shown in 804 in FIG. 8, there is one online task in an online task queue of a CPU 0, and the online task is in a running state; and there are five offline tasks in an offline task queue of the CPU 0. Neither an online task queue nor an offline task queue of a CPU 1 has a task, and the CPU 1 is in an idle state. After the load balancing process is triggered, the task in the offline task queue of the CPU 0 can be migrated to the CPU 1, and a quantity of tasks that can be migrated to a first CPU is 2. However, migration of an offline task needs to wake up the CPU 1, and waking up the CPU 1 causes a clock interrupt, and further affects the online task in the running state on the CPU 0. In addition, when the CPU 1 runs the offline task, the online task that is running in the CPU 0 is also affected. In this case, the offline task is not migrated, that is, the migration of the offline task is abandoned.

Migration of an online task and an offline task is used as an example. An experimental result shows that, on the premise that a decrease in quality of service of the online task does not exceed 5%, CPU resource utilization can be improved to 60% by applying the task migration method provided in embodiments of this application, compared with 30%, which is currently the highest in the industry, it can be proved that the CPU resource utilization can be improved in embodiments of this application.

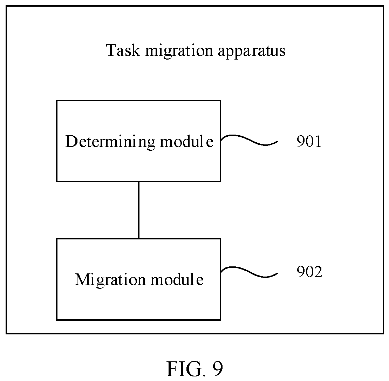

FIG. 9 is a diagram of a structure of a task migration apparatus according to an embodiment of this application. As shown in FIG. 9, the apparatus includes a determining module 901 and a migration module 902.

The determining module 901 is configured to determine a first CPU and a second CPU from a plurality of CPUs, where each CPU corresponds to at least one task waiting queue, the at least one task waiting queue is used to store tasks with a plurality of priorities, at least one task waiting queue of the second CPU includes at least one first task and at least one second task, the first task is a task with a highest priority in the at least one task waiting queue, and a first priority corresponding to the first task is higher than a second priority corresponding to the second task; and
the migration module 902 is configured to preferably migrate the at least one first task in the at least one task waiting queue of the second CPU to at least one task waiting queue of the first CPU.

In some embodiments, the migration module 902 is further configured to: when task running statuses of the first CPU and the second CPU meet a preset condition, migrate the at least one second task in the at least one task waiting queue of the second CPU to the at least one task waiting queue of the first CPU.

In some embodiments, the preset condition is that the second CPU is running a task with the first priority and the first CPU is running a task with the second priority.

In some embodiments, the preset condition is that both the first CPU and the second CPU are running a task with the second priority.

In some embodiments, the migration module 902 is further configured to: when the first CPU does not run a task, and the second CPU is running a task with the first priority, skip migrating the second task.

In some embodiments, the migration module 902 is further configured to: when a task with the first priority is running in both the first CPU and the second CPU, skip migrating the second task.

In some embodiments, there are a plurality of task waiting queues, and each task waiting queue is used to store tasks with a same priority.

In some embodiments, the first task is an online task, and the second task is an offline task.

It should be noted that, when the task migration apparatus provided in the foregoing embodiments performs the task migration, division into the foregoing functional modules is merely used as an example for description. In actual application, the foregoing functions can be allocated to different functional modules and implemented based on a requirement, that is, an inner structure of the apparatus is divided into different functional modules to implement all or some of the functions described above. In addition, the task migration apparatus provided in the foregoing embodiment belongs to a same concept as the task migration method embodiment. For a specific implementation process of the task migration apparatus, refer to the method embodiment. Details are not described herein again.

In this application, terms such as "first" and "second" are used to distinguish between same items or similar items whose functions are basically the same. It should be understood that "first", "second", and "n^{th}" do not have a logical or time sequential dependency relationship, and do not limit a quantity and an execution sequence. It should also be understood that although the following descriptions use terms such as "first" and "second" to describe various elements, these elements should not be limited by the terms. These terms are simply used to distinguish one element from another. For example, without departing from the scope of the various examples, a first task may be referred to as a second task, and similarly, a second task may be referred to as a first task. Both the first task and the second task may be the tasks in the task waiting queue, and in some cases, may be separate and different tasks.

A term "at least one" in this application means one or more, and a term "a plurality of" in this application means two or more. For example, a plurality of target files mean two or more target files.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

All or some of the foregoing embodiments may be implemented by using software, hardware, firmware, or any combination thereof. When software is used to implement embodiments, all or some embodiments may be implemented in a form of program structure information. The program structure information includes one or more program instructions. When the program instructions are loaded and executed on a computing device, the procedures or functions according to embodiments of this application are all or partially generated.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

In conclusion, the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the scope of the technical solutions of embodiments of this application.

## Claims

1. A task migration method, wherein the method comprises:
determining a first CPU and a second CPU from a plurality of CPUs, wherein each CPU corresponds to at least one task waiting queue, the at least one task waiting queue is used to store tasks with a plurality of priorities, at least one task waiting queue of the second CPU comprises at least one first task and at least one second task, the first task is a task with a highest priority in the at least one task waiting queue, and a first priority corresponding to the first task is higher than a second priority corresponding to the second task; and
preferably migrating the at least one first task in the at least one task waiting queue of the second CPU to at least one task waiting queue of the first CPU.

2. The method according to claim **1,** wherein after the preferably migrating the at least one first task in the at least one task waiting queue of the second CPU to the first CPU, the method further comprises:
when task running statuses of the first CPU and the second CPU meet a preset condition, migrating the at least one second task in the at least one task waiting queue of the second CPU to the at least one task waiting queue of the first CPU.

3. The method according to claim 2, wherein the preset condition is that the second CPU is running a task with the first priority and the first CPU is running a task with the second priority.

4. The method according to claim 2, wherein the preset condition is that both the first CPU and the second CPU are running a task with the second priority.

5. The method according to claim 2, wherein the method further comprises:
when the first CPU does not run a task, and the second CPU is running a task with the first priority, skipping migrating the second task.

6. The method according to claim 2, wherein the method further comprises:
when a task with the first priority is running in both the first CPU and the second CPU, skipping migrating the second task.

7. The method according to any one of claims 1 to 6, wherein there are a plurality of task waiting queues, and each task waiting queue is used to store tasks with a same priority.

8. The method according to any one of claims 1 to 7, wherein the first task is an online task, and the second task is an offline task.

9. A task migration apparatus, wherein the apparatus comprises:
a determining module, configured to determine a first CPU and a second CPU from a plurality of CPUs, wherein each CPU corresponds to at least one task waiting queue, the at least one task waiting queue is used to store tasks with a plurality of priorities, at least one task waiting queue of the second CPU comprises at least one first task and at least one second task, the first task is a task with a highest priority in the at least one task waiting queue, and a first priority corresponding to the first task is higher than a second priority corresponding to the second task; and
a migration module, configured to preferably migrate the at least one first task in the at least one task waiting queue of the second CPU to at least one task waiting queue of the first CPU.

10. The apparatus according to claim 9, wherein the apparatus further comprises:
the migration module is further configured to: when task running statuses of the first CPU and the second CPU meet a preset condition, migrate the at least one second task in the at least one task waiting queue of the second CPU to the at least one task waiting queue of the first CPU.

11. The apparatus according to claim 10, wherein the preset condition is that the second CPU is running a task with the first priority and the first CPU is running a task with the second priority.

12. The apparatus according to claim 10, wherein the preset condition is that both the first CPU and the second CPU are running a task with the second priority.

13. The apparatus according to claim 10, wherein the migration module is further configured to: when the first CPU does not run a task, and the second CPU is running a task with the first priority, skip migrating the second task.

14. The apparatus according to claim 10, wherein the migration module is further configured to: when a task with the first priority is running in both the first CPU and the second CPU, skip migrating the second task.

15. The apparatus according to any one of claims 9 to 14, wherein there are a plurality of task waiting queues, and each task waiting queue is used to store tasks with a same priority.

16. The apparatus according to any one of claims 9 to 15, wherein the first task is an online task, and the second task is an offline task.

17. A computing device, wherein the computing device comprises a processor and a memory, the memory is configured to store at least one segment of program code, and the at least one segment of program code is loaded by the processor to perform the task migration method according to any one of claims 1 to 8.

18. A computer-readable storage medium, wherein the computer-readable storage medium is configured to store at least one segment of program code, and the at least one segment of program code is used to perform the task migration method according to any one of claims 1 to 8.

19. A computer program product, wherein when the computer program product runs on a computing device, the computing device is enabled to perform the task migration method according to any one of claims 1 to 8.
